# EUROPEAN PATENT APPLICATION

(11) **EP 2 306 396 A1**
(43) Date of publication of application: **06.04.2011**
(21) Application number: 08777679.5
(22) Date of filing: 27.06.2008
(51) Int. Cl.: G06Q 50/00, G01C 21/00, G08G 1/137

(54) **ROUTE SEARCHING APPARATUS AND ROUTE SEARCHING METHOD**

(71) Applicant: Navitime Japan Co., Ltd., Tokyo 107-0062 (JP)
(72) Inventor: ONISHI, Keisuke, Tokyo 101-0041 (JP); KIKUCHI, Shin, Tokyo 101-0041 (JP); MURAI, Kazuyoshi, Tokyo 101-0041 (JP); SAKAMOTO, Hiroshi, Tokyo 101-0041 (JP)
(74) Representative: HOFFMANN EITLE
(86) International application number: PCT/JP2008/061767
(87) International publication number: WO 2009/157089

(57) **Abstract**

According to the present invention, at least one route that satisfies a route search condition received from an information processing terminal and information distributor identification information for identifying an information distributor is created, greenhouse gas emissions emitted when the route is used are calculated for each of the routes, a route search result including the route and the emissions are transmitted to the information processing terminal, a route selection request is received from the information processing terminal, the emissions are offset by subtracting emissions corresponding to the selected route from an amount of emission credits stored in a storage unit, corresponding to the information distributor identified by the information distributor identification information, and an offset result is transmitted to the information processing terminal.

## Description

### TECHNICAL FIELD

The present invention relates to a route searching apparatus and a route searching method.

### BACKGROUND ART

Conventionally, in an information distribution system, there is distributed information of interested places (such as shops, event sites, dispatched places, and real estate) of end users provided by an information distributor. Further, in recent years, an information distribution system that provides information of interested places to end users as well as an optimum route to the interested places from the present location of the end users by using mobile terminals has been developed.

For example, in a navigation system described in Patent Document 1, there is disclosed a system such that a computer system for a first information distributor having information of interested places and a computer system for a second information distributor that can perform map distribution and route guidance work together to provide an optimum route to an interested place by on foot, a private car, and the public transportation in combination.

Meanwhile, a scheme referred to as carbon offsets has been proposed as a measure for offsetting carbon dioxide emissions due to growing international recognition of environmental concerns, particularly, global warming due to greenhouse gas emissions. In this scheme, emission credits are purchased with respect to carbon dioxide emissions, and the resources corresponding to the emission credits are invested in natural energy development and forestation, to offset the carbon dioxide emissions.

For example, in a trading system described in Patent Document 2, there is disclosed a system such that sales and purchases of emission credits between countries are performed on the Internet by using negotiation transaction or auction.

Patent Document 1: Japanese Patent No. 3868262
Patent Document 2: Japanese Patent Application Laid-open No. 2002-149978

### DISCLOSURE OF INVENTION

### PROBLEM TO BE SOLVED BY THE INVENTION

In the conventional navigation system described in Patent Document 1, however, the information distributors only aim at guiding the end users to their interested places. Because an unspecified large number of end users gather by using various means of transportation without being aware of the burden on the environment, there is a problem that emission of greenhouse gases is indirectly induced by the means of transportation.

In the trading system described in Patent Document 2, because trading entities are limited and a trading unit is more than several thousand tons, when individuals wish to contribute to the environmental issues, there is a problem that they cannot purchase any emission credits.

The present invention has been achieved to solve the above problems, and it is an object of the present invention to provide a route searching apparatus and a route searching method in which for end users of information distribution services, actions of the end users can be connected to environmental conservation activities via carbon offset on a real-time basis along with a movement to interested places, and for information distributors, information distribution can be performed while taking environmental measures.

### MEANS FOR SOLVING PROBLEM

In order to attain this object, a route searching apparatus and a route searching method according to one aspect of the present invention are a route searching apparatus including a control unit and a storage unit and connected communicably via a network to an information processing terminal including an input unit and a display unit and a route searching method executed by the route searching apparatus. The information processing terminal is held by an end user of information distribution services provided by information distributors who wish to offset their carbon footprint. The storage unit includes a route-search-information storage unit that stores route search information including timetable data of transportation facilities and road network data, an emission-calculation-standard storage unit that stores a calculation standard of emissions of greenhouse gases per certain distance for each of the transportation facilities, and an emission-credit-amount storage unit that stores an amount of emission credits of the greenhouse gases for each of the information distributors. The control unit includes a condition receiving unit (a condition receiving step) that receives a route search condition input via the input unit of the information processing terminal, and information distributor identification information for identifying the information distributors, from the information processing terminal, a route creating unit (a route creating step) that creates at least one route satisfying the route search condition received by the condition receiving unit (at the condition receiving step) by using the route search information stored in the route-search-information storage unit, an emission calculating unit (an emission calculating step) that calculates the emissions emitted at a time of using the at least one route created by the route creating unit (at the route creating step) for each corresponding route, by using the calculation standard stored in the emission-calculation-standard storage unit, a route-search-result displaying unit (a route-search-result displaying step) that transmits a route search result including the at least one route created by the route creating unit (at the route creating step) and the emissions calculated for each corresponding route by the emission calculating unit (at the emission calculating step) to the information processing terminal so that the route search result is displayed on the display unit, a route-selection receiving unit (a route-selection receiving step) that receives a route selection request for requesting the route selected via the input unit of the information processing terminal based on the route and the emissions displayed on the display unit of the information processing terminal by the route-search-result displaying unit (at the route-search-result displaying step) from the information processing terminal, an emission offsetting unit (an emission offsetting step) that offsets the emissions by subtracting the emissions corresponding to the route selected according to the route selection request from the amount of emission credits stored in the emission-credit-amount storage unit corresponding to the information distributor specified by the information distributor identification information received by the condition receiving unit (at the condition receiving step), when the route selection request is received by the route-selection receiving unit (at the route-selection receiving step), and an offset-result displaying unit (an offset-result displaying step) that transmits an offset result including the emissions offset by the emission offsetting unit (at the emission offsetting step) to the information processing terminal so that the offset result is displayed on the display unit.

A route searching apparatus and a route searching method according to another aspect of the present invention are a route searching apparatus including a control unit and a storage unit and connected communicably via a network to an information processing terminal including an input unit and a display unit and a route searching method executed by the route searching apparatus. The information processing terminal is held by an end user with respect to information distributors who wish to offset their carbon footprint. The storage unit includes a route-search-information storage unit that stores route search information including timetable data of transportation facilities and road network data, an emission-calculation-standard storage unit that stores a calculation standard of emissions of greenhouse gases per certain distance for each of the transportation facilities, and an emission-credit-amount storage unit that stores an amount of emission credits of the greenhouse gases for each of the information distributors. The control unit includes a condition receiving unit (a condition receiving step) that receives a route search condition including a specified point specified by the information distributor in a point of departure or destination input via the input unit of the information processing terminal, from the information processing terminal, a route creating unit (a route creating step) that creates at least one route satisfying the route search condition received by the condition receiving unit (at the condition receiving step) by using the route search information stored in the route-search-information storage unit, an emission calculating unit (an emission calculating step) that calculates the emissions emitted at a time of using the at least one route created by the route creating unit (at the route creating step) for each corresponding route, by using the calculation standard stored in the emission-calculation-standard storage unit, a route-search-result displaying unit (a route-search-result displaying step) that transmits a route search result including at least one route created by the route creating unit (at the route creating step) and the emissions calculated for each corresponding route by the emission calculating unit (at the emission calculating step) to the information processing terminal so that the route search result is displayed on the display unit, a route-selection receiving unit (a route-selection receiving step) that receives a route selection request for requesting the route selected via the input unit of the information processing terminal based on the route and the emissions displayed on the display unit of the information processing terminal by the route-search-result displaying unit (at the route-search-result displaying step) from the information processing terminal, an emission offsetting unit (an emission offsetting step) that offsets the emissions by subtracting the emissions corresponding to the route selected according to the route selection request from the amount of emission credits stored in the emission-credit-amount storage unit corresponding to the specified point specified by the information distributor specified by the route search condition received by the condition receiving unit (at the condition receiving step), when the route selection request is received by the route-selection receiving unit (at the route-selection receiving step), and an offset-result displaying unit (an offset-result displaying step) that transmits an offset result including the emissions offset by the emission offsetting unit (at the emission offsetting step) to the information processing terminal so that the offset result is displayed on the display unit.

The route searching apparatus according to still another aspect of the present invention is **characterized in that** the amount of emission credits is managed per unit of emission credits, and the emission offsetting unit includes an emission integrating unit that calculates an integrated value of a plurality of the emissions calculated for each corresponding route by the emission calculating unit, when the route-selection receiving unit in the route searching apparatus receives the route selection request respectively transmitted from a plurality of the information processing terminals, and an integrated-value determining unit that compares the integrated value calculated by the emission integrating unit with the one unit stored in the emission-credit-amount storage unit, to determine whether the integrated value exceeds the one unit.

The route searching apparatus according to still another aspect of the present invention is **characterized in that** the amount of emission credits is an amount of the emission credits already purchased or to be purchased by the information distributor, and the emission offsetting unit further includes a purchase requesting unit that when the integrated-value determining unit determines that the integrated value exceeds the one unit, offsets the integrated value for the one unit by subtracting the one unit of the emission credits from the integrated value, and when the integrated value is offset for the one unit, requests the information distributor to purchase the emission credits.

The route searching apparatus according to still another aspect of the present invention is **characterized in that** the amount of emission credits is an amount of the emission credits already purchased or to be purchased by the information distributor, and when the integrated-value determining unit determines that the integrated value exceeds the one unit, the offset-result displaying unit transmits, to the information processing terminal, the offset result indicating suspension of transmission of at least one of the routes created by the route creating unit to the information processing terminal, so that the offset result is displayed on the display unit, because the information distributor is not capable of offsetting the emissions corresponding to the route selected according to the route selection request.

The route searching apparatus according to still another aspect of the present invention is **characterized in that** the amount of emission credits is an amount of the emission credits already purchased or to be purchased by the information distributor, and when the integrated-value determining unit determines that the integrated value exceeds the one unit, the offset-result displaying unit changes a display method and a display content to be displayed on the display unit with respect to the route that has not been able to be offset in the offset result, and displays the display content.

The route searching apparatus according to still another aspect of the present invention is **characterized in that** the amount of emission credits is an amount of the emission credits already purchased or to be purchased by the information distributor, and when the integrated-value determining unit determines that the integrated value exceeds the one unit, the offset-result displaying unit transmits the offset result indicating that the route search condition is changed into a route search condition for a route search not using the transportation facilities that emit a predetermined amount or more of the greenhouse gases, because the information distributor is not capable of offsetting the emissions corresponding to the route selected according to the route selection request, to the information processing terminal so that the offset result is displayed on the display unit.

The route searching apparatus according to still another aspect of the present invention is **characterized in that** the control unit further includes a specified-point confirming unit that confirms that the information processing terminal is at the specified point, and the emission offsetting unit cancels offset of the emissions in the emission offsetting unit when it is not possible to be confirmed by the specified-point confirming unit that the information processing terminal is at the specified point.

The route searching apparatus according to still another aspect of the present invention is **characterized in that** the storage unit further includes a history-information storage unit that stores history information of at least a part of the route search result and the offset result associated with each other for each of the information distributors, the route-search-result displaying unit stores at least a part of the route search result in the history-information storage unit for each of the information distributors, and the offset-result displaying unit stores at least a part of the offset result in the history-information storage unit for each of the information distributors.

### EFFECT OF THE INVENTION

According to the present invention, the information distributor who wishes to offset their carbon footprint can indirectly ascertain and offset greenhouse gas emissions generated due to a movement of an unspecified large number of end users to a spot intended by the information distributor, by route search such as a navigation system guided by a link in information distributed to the end users. Consequently, according to the present invention, even an information distributor who is not used to emission trading can easily participate in the carbon offset scheme, thereby not only more measures effective as the global warming measures can be taken but also actual achievement made by the information distributor by participating in the carbon offset scheme can be appealed socially.

According to the present invention, when route search is provided by setting a spot specified by the information distributor (such as an event site and the like provided by the information distributor), which is an interested place of end users, as a point of departure or destination, the carbon offset scheme can be executed automatically. According to the present invention, therefore, greenhouse gas emissions generated by guiding end users to the interested places by the information distributor can be indirectly ascertained and offset more easily.

According to the present invention, carbon dioxide emissions generated due to route searching requests by a plurality of end users can be integrated and compared with a purchase amount or an estimated purchase amount of emission credits. Therefore, the information distributor can ascertain the total amount of emissions to be carbon offset, thereby facilitating management of purchase of carbon credits such as a purchase amount and a purchase time of the carbon credits.

According to the present invention, because it can be selected whether to purchase emission credits beforehand or to purchase the emission credits ex post facto, purchase of the emission credits can be selected according to a funding ability or a business plan of the information distributor. For example, when the information distributor purchases the emission credits ex post facto, because less initial investment is required, even when the information distributor participates in the carbon offset scheme for the first time, participation becomes easy.

According to the present invention, when emission credits run out, purchase of the emission credits is requested to the information distributor. Therefore, the information distributor can quickly ascertain the purchase time of emission credits, and offsetting of emission credits can be smoothly performed.

According to the present invention, it is possible to change a display on an information processing terminal into a display that replenishment of emission credits is not performed by the information distributor (for example, by suspension of route transmission, a change of display format such as icon or display method, or a display change to a route in which greenhouse gases are not emitted by a predetermined amount or more). Therefore, when the information distributor omits to purchase emission credits, this matter can be recognized by end users. Accordingly, it is expected that the system is operated strictly, so that the system is trusted even by the third party.

According to the present invention, because it can be confirmed whether an end user who has performed route search has reached a specified point, the information distributor can appropriately ascertain whether the end user has certainly moved according to the route, and an appropriate amount of emission credits to be paid by the information distributor.

According to the present invention, history information in which at least a part of a route search result and an offset result are associated with each other can be stored for each of the information distributors. Consequently, according to the present invention, for example, emissions that have been or have not been able to carbon offset by the information distributor, can be stored. Therefore, an amount of purchase of emission credits and the like required by information to be distributed can be easily ascertained, thereby facilitating management of the emission credits.

### BRIEF DESCRIPTION OF DRAWINGS

FIG. 1 is a schematic diagram of a basic principle of the present invention.
FIG. 2 is a block diagram of an example of a logical configuration of a route searching apparatus 100 according to the present invention.
FIG. 3 is an example of basic processing of the route searching apparatus 100 according to the present invention.
FIG. 4 is an example of a display screen of an information processing terminal 10 that displays a route search result and an offset result.
FIG. 5 is a flowchart of an example of an emission offsetting process and an offset-result displaying process.
FIG. 6 is an example of the route searching apparatus 100 according to another embodiment of the present invention configured by a plurality of server devices.

### EXPLANATIONS OF LETTERS OR NUMERALS

- 10-1 to 10-3: information processing terminal
- 100: route searching apparatus
- 102: control unit
- 102a: condition receiving unit
- 102b: route creating unit
- 102c: emission calculating unit
- 102d: route-search-result displaying unit
- 102e: route-selection receiving unit
- 102f: emission offsetting unit
- 102g: emission integrating unit
- 102h: integrated-value determining unit
- 102i: purchase requesting unit
- 102j: offset-result displaying unit
- 102k: specified-point confirming unit
- 104: communication control interface unit
- 106: storage unit
- 106a: route-search information file
- 106b: emission calculation-standard file
- 106c: emission-credit amount file
- 106d: history-information file
- 200: information distribution server
- 206: storage unit
- 206a: interested place file
- 300: network

### BEST MODE(S) FOR CARRYING OUT THE INVENTION

The following describes an embodiment of a route searching apparatus, a route searching method, and a program according to the present invention in detail with reference to the drawings below. The present invention is not limited to the embodiments.

### Outline of Present Invention

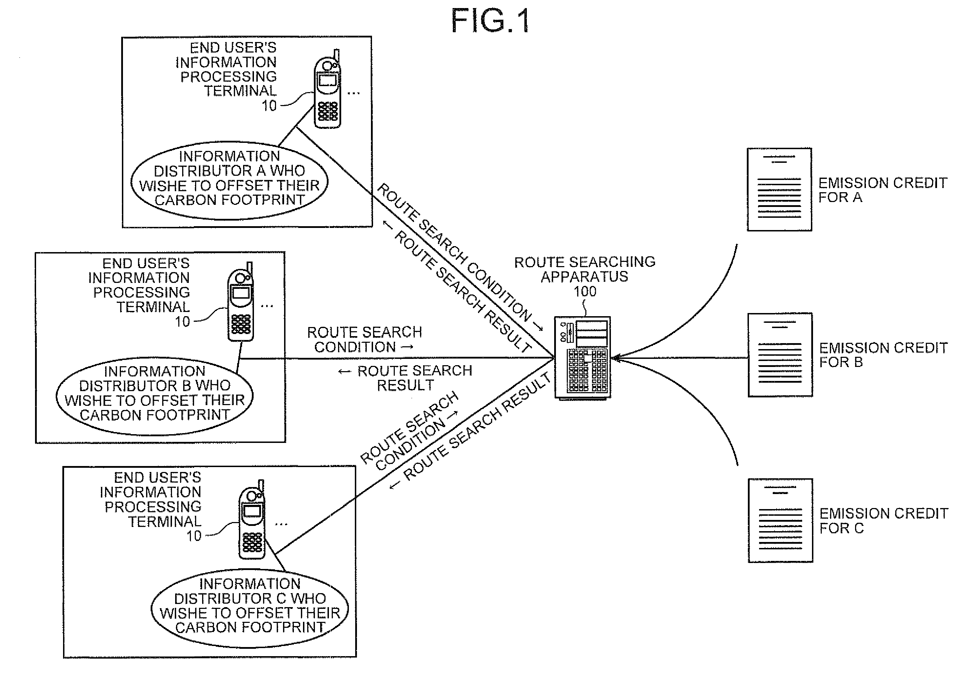

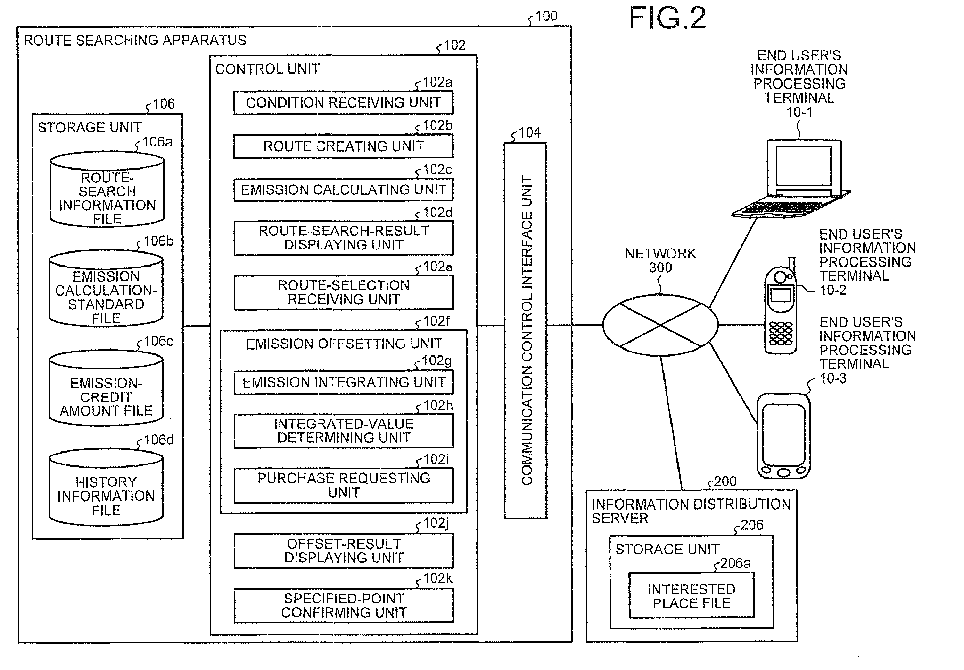

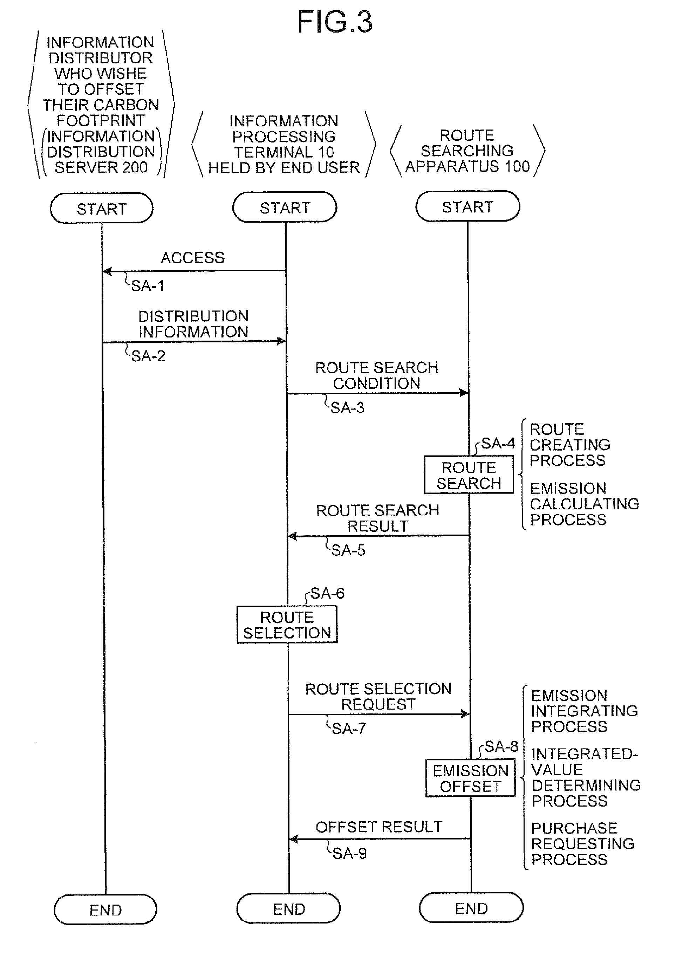

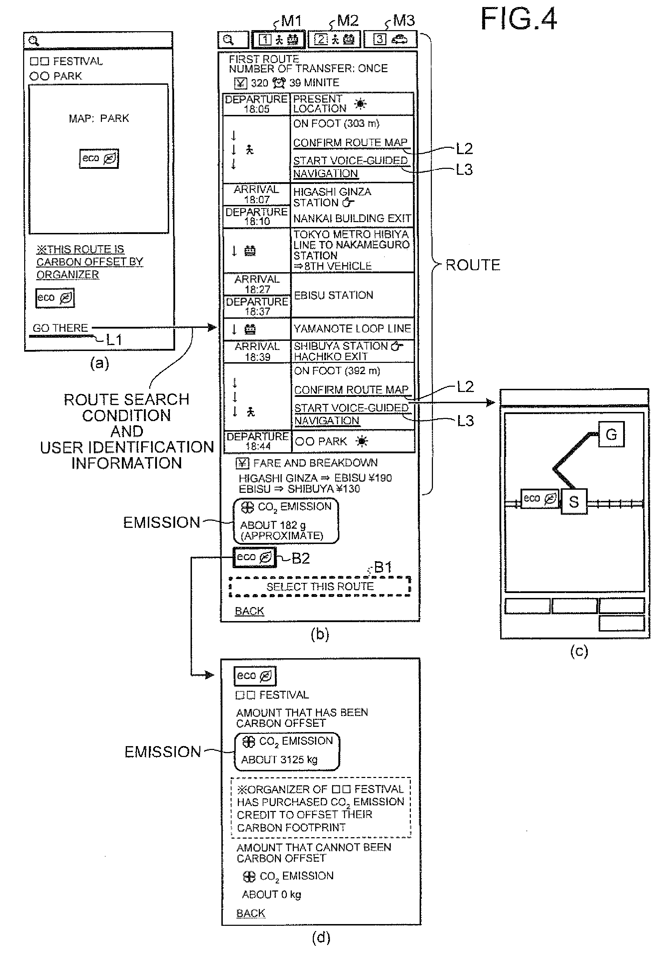

In an outline of the present invention, a configuration and basic processing of a route searching apparatus of the present invention are explained with reference to FIGS. 1 to 4, and then respective processes performed by the route searching apparatus of the present invention are explained in detail below. FIG. 1 is a schematic diagram of a basic principle of the present invention. FIG. 2 is a block diagram of an example of a logical configuration of a route searching apparatus 100 according to the present invention, and conceptually shows only parts of the configuration related to the present invention. FIG. 3 is an example of basic processing of the route searching apparatus 100 according to the present invention. FIG. 4 is an example of a display screen of an information processing terminal 10 that displays a route search result and an offset result.

The present invention schematically has the following basic characteristics.

As shown in FIG. 1, in the present invention, an information distributor who wishes to offset their carbon footprint, the information processing terminal 10 of an end user including an input unit and a display unit, and the route searching apparatus 100 including a storage unit and a control unit are communicably connected to each other.

The information processing terminal 10 receives information distributor identification information for identifying a distributor, or distribution information such as a link including specified point information therein, which includes a point specified by the distributor, in a point of departure or destination, from the information distributor, and displays the information on the display unit.

The control unit of the route searching apparatus 100 then receives a route search condition and information distributor identification information for identifying an information distributor input via the input unit of the information processing terminal 10, or a route search condition including a point specified by the information distributor in a point of departure or destination input via the input unit of the information processing terminal 10 to perform route search, and transmits a route search result to the information processing terminal 10. The control unit of the route searching apparatus 100 also calculates emitted greenhouse gas emissions based on a route selected by the information processing terminal 10, and offsets the greenhouse gas emissions with emission credits of the information distributor stored by the route searching apparatus 100.

The "information distributor" is a distributor (including an individual and a corporate body) who provides information to end users. As an example, the information distributor may be a distributor who distributes information such as interested places (such as shops and event sites) but does not specialize in navigation. Specifically, the information distributor may be a distributor who operates a store information site, an event information site, a search site and the like.

The "end user" is an individual or a group who holds the information processing terminal 10 and receives distribution of information such as an interested place from an information distribution server or the like of the information distributor. For example, the end user may be an individual or a group who registers in the event information site or the like provided by the information distributor, to receive distribution of event information and the like from the information distributor regularly.

### Configuration of Route Searching Apparatus 100

The configuration of the route searching apparatus 100 shown in FIG. 1 is explained with reference to FIG. 2.

As shown in FIG. 2, the route searching apparatus 100 is schematically connected to information processing terminals 10-1 to 10-3 respectively including an input unit (not shown) and a display unit (not shown) held by end users and an information distribution server 200 including a storage unit 206 through a network 300 via a communication control interface unit 104, and includes a storage unit 106 and a control unit 102. Respective units of the route searching apparatus 100 are communicably connected to each other via an arbitrary communication path.

In FIG. 2, the information processing terminals 10-1 to 10-3 are devices that have portability, and have functions for accessing the route searching apparatus 100 and the information distribution server 200 to search information and the like. For example, the information processing terminals 10-1 to 10-3 are, respectively, an information processor such as a laptop personal computer generally available in the market, or a portable terminal device such as a mobile phone, a PHS, or a PDA. The information processing terminals 10-1 to 10-3 include a display unit (such as a display or a monitor constituted of a liquid crystal or organic EL) that displays a route search result or an offset result received from the route searching apparatus 100 or information of an interested place received from the information distribution server 200, and an input unit (such as a key input unit, a touch panel, a keyboard, or a microphone) that inputs a route search condition to be transmitted to the route searching apparatus 100. The information processing terminals 10-1 to 10-3 may include, for example, a position detecting unit (not shown) having a GPS function, and may transmit position information indicating a present location detected by the position detecting unit to the route searching apparatus 100 so that navigation guide may be performed on a real-time basis from the route searching apparatus 100.

In FIG. 2, the information distribution server 200 is interconnected to the information processing terminals 10-1 to 10-3 and the route searching apparatus 100 via the network 300, and includes the storage unit 206. The storage unit 206 is a storage unit such as a fixed disk drive, and stores various databases and tables (an interested place file 206a and the like).

The interested place file 206a to be stored in the storage unit 206 is an interested-place storage unit that stores information of interested places such as shops, event sites, and dispatched places, which is contents of a restaurant search site, a matching site of part-time jobs and temporary jobs, an event information site such as a concert, a shop guide site and the like.

In FIG. 2, the communication control interface unit 104 is an interface connected to a communication device (not shown) such as a router connected to a communication line, a phone line and the like, and has a function of performing communication control between the route searching apparatus 100 and the network 300. That is to say, the communication control interface unit 104 may have a function to communicate data to an external device such as the information processing terminals 10-1 to 10-3 and the information distribution server 200 via the communication line. The network 300 has a function of interconnecting the route searching apparatus 100 and the external device such as the information processing terminals 10-1 to 10-3 or the information distribution server 200, and may include the Internet, a telephone network (including portable terminal network and general telephone network), the Intranet and the like.

In FIG. 2, the storage unit 106 is a storage unit such as a fixed disk device, and stores various databases and tables (a route-search information file 106a to a history-information file 106d). For example, the storage unit 106 stores various programs, tables, files, databases, web pages and the like to be used for various processes.

Among the respective components of the storage unit 106, the route-search information file 106a is a route-search-information storage unit that stores the route search information including timetable data of transportation facilities and road network data to be used when the control unit 102 creates at least one route satisfying the route search condition (such as a point of departure, a destination, a departure time, an arrival time, and transportation facilities to be used) received from the information processing terminals 10-1 to 10-3. The timetable data to be stored in the route-search information file 106a is numerical information indicating a timetable of each transportation facility such as a train, an airplane, a bus, a streetcar, an aerial tramway, a monorail, a cable car, and a ship. The road network data to be stored in the route-search information file 106a is latitude and longitude information, position information and the like on a map such as various roads to be used for creating a route at the time of moving on foot or by a bicycle, a car, a motorbike and the like. The timetable data and the road network data are stored in the route-search information file 106a beforehand, and the control unit 102 of the route searching apparatus 100 may regularly download the latest data via the network to update the route search information stored in the route-search information file 106a.

An emission calculation-standard file 106b is an emission-calculation-standard storage unit that stores a calculation standard of greenhouse gas emissions per certain distance for each transportation facility to be used when the control unit 102 calculates greenhouse gas emissions emitted at the time of using at least one of the generated routes for each route. The calculation standard of emissions to be stored in the emission calculation-standard file 106b is a standard numerical value of emissions of greenhouse gases such as carbon dioxide per person calculated by being multiplied by travel distance for each transportation facility.

As an example, according to "Transport, Traffic and Environment, 2007" (issued by the Foundation for Promoting Personal Mobility and Ecological Transportation under supervision of Environment and Ocean Division, Policy Bureau, Ministry of Land, Infrastructure, Transport and Tourism), emissions of carbon dioxide of each transportation facility per person are, for example, 173 (g/km) in a case of a private car, 111 (g/km) in a case of an airplane, 51 (g/km) in a case of a bus, and 19 (g/km) in a case of a train. It is assumed that there are no carbon dioxide emissions in a case of walking. It is also assumed that even if there is a difference from a transportation facility actually used, when many end users use various routes, the figure comprehensively approaches the one calculated by using the numerical value.

For example, in the case of a train, detailed classification may be performed according to route or vehicle type (such as a local train or a bullet train), and the calculation standard may be corrected and calculated by using an optimum numerical value according to the classification. Further, for example, in a depopulated route, CO₂ emissions per passenger may increase. Therefore, the calculation standard may be corrected and calculated by using an appropriate numerical value with respect to the depopulated route.

The calculation standard is stored in the emission calculation-standard file 106b beforehand, and the control unit 102 of the route searching apparatus 100 may regularly download the latest data via the network to update the calculation standard stored in the emission calculation-standard file 106b.

An emission-credit amount file 106c is an emission-credit-amount storage unit that stores an amount of emission credits for the greenhouse gases for each of the information distributors, which is used when the control unit 102 receives a route selection request selected by an end user via the input unit from the information processing terminals 10-1 to 10-3 and offsets emissions by subtracting the emissions corresponding to the received route from the amount of emission credits stored in the emission-credit amount file 106c. The amount of emission credits to be stored in the emission-credit amount file 106c is numerical information indicating an amount of the emission credits already purchased or to be purchased (when emission credits are purchased after the emissions of the information distributor are summed up) by the information distributor. Because a unit price of emission credits is different according to the source thereof or timing, the emission-credit amount file 106c may store an identification code of the emission credit, total emissions, a unit price of the emission credit and the like. In the present embodiment, the information of the identification code, unit price and the like of the emission credits are used when the control unit 102 calculates a purchase amount of emission credits required for offsetting the calculated emissions.

The history-information file 106d is a history-information storage unit that stores history information in which information distributors, route search results (routes, emissions and the like), and offset results (offset emissions and the like) are associated with each other, by storing the route search results, the offset results and the like to be transmitted to the information processing terminals 10-1 to 10-3 for each of the information distributors by the control unit 102. As an example, the history-information file 106d may store a route requested to be selected by the information processing terminals 10-1 to 10-3 for each end user in association with emissions offset by the amount of emission credits of the corresponding information distributor or emissions that have not been able to be offset.

In FIG. 2, the control unit 102 includes an internal memory that stores a control program such as an operating system (OS), a program specifying various processing procedures, and necessary data. The control unit 102 performs information processing for executing various pieces of processing by using these programs. The control unit 102 functionally and conceptually includes a condition receiving unit 102a, a route creating unit 102b, an emission calculating unit 102c, a route-search-result displaying unit 102d, a route-selection receiving unit 102e, an emission offsetting unit 102f, an offset-result displaying unit 102j, and a specified-point confirming unit 102k.

Among these units, the condition receiving unit 102a is a condition receiving unit that receives the route search condition input via the input unit of the information processing terminals 10-1 to 10-3 and the information distributor identification information for identifying the information distributor from the information processing terminals 10-1 to 10-3. The condition receiving unit 102a is a condition receiving unit that receives the route search condition including a specified point specified by the information distributor in a point of departure or destination input via the input unit of the information processing terminals 10-1 to 10-3, from the information processing terminals 10-1 to 10-3.

The route creating unit 102b is a route creating unit that creates at least one route satisfying the route search condition received by the condition receiving unit 102a by using the route search information stored in the route-search information file 106a.

The emission calculating unit 102c is an emission calculating unit that calculates emissions emitted at the time of using at least one route created by the route creating unit 102b for each corresponding route, by using the calculation standard stored in the emission calculation-standard file 106b.

The route-search-result displaying unit 102d is a route-search-result displaying unit that transmits a route search result including at least one route created by the route creating unit 102b and emissions calculated for each corresponding route by the emission calculating unit 102c to the information processing terminals 10-1 to 10-3 so that the route search result is displayed on the display unit. The route-search-result displaying unit 102d may store at least a part of the route search result in the history-information file 106d for each of the information distributors.

The route-selection receiving unit 102e is a route-selection receiving unit that receives, from the information processing terminals 10-1 to 10-3, a route selection request for requesting the route selected via the input unit of the information processing terminals 10-1 to 10-3, based on the route and emissions displayed on the display unit of the information processing terminals 10-1 to 10-3 by the route-search-result displaying unit 102d.

The emission offsetting unit 102f is an emission offsetting unit that offsets the emissions by subtracting the emissions corresponding to the route selected according to the route selection request from the amount of emission credits stored in the emission-credit amount file 106c corresponding to the information distributor specified by the information distributor identification information received by the condition receiving unit 102a, when the route selection request is received by the route-selection receiving unit 102e. The emission offsetting unit 102f may cancel emissions offset by the emission offsetting unit 102f when the specified-point confirming unit 102k described later cannot confirm that the information processing terminals 10-1 to 10-3 are at a specified point.

The emission offsetting unit 102f also includes an emission integrating unit 102g, an integrated-value determining unit 102h, and a purchase requesting unit 102i.

Among these units, the emission integrating unit 102g is an emission integrating unit that calculates an integrated value of a plurality of emissions calculated for each corresponding route by the emission calculating unit 102c, when the route-selection receiving unit 102e in the route searching apparatus 100 receives the route selection request respectively transmitted from the information processing terminals 10-1 to 10-3. The integrated-value determining unit 102h is an integrated-value determining unit that compares the integrated value of emissions calculated by the emission integrating unit 102g with one unit of emission credits stored in the emission-credit amount file 106c, to determine whether the integrated value exceeds one unit. When the integrated-value determining unit 102h determines that the integrated value exceeds one unit, the purchase requesting unit 102i is a purchase requesting unit that when the integrated-value determining unit 102h determines that the integrated value exceeds the one unit, offsets the integrated value for the one unit by subtracting the one unit of the emission credits from the integrated value, and when the integrated value is offset for the one unit, requests the information distributor to purchase the emission credits.

The offset-result displaying unit 102j is an offset-result displaying unit that transmits an offset result including the emissions offset by the emission offsetting unit 102f to the information processing terminals 10-1 to 10-3 so that the offset result is displayed on the display unit.

When the integrated-value determining unit 102h determines that the integrated value exceeds one unit, because the information distributor cannot offset the emissions corresponding to the route selected according to the route selection request, the offset-result displaying unit 102j may transmit to the information processing terminals 10-1 to 10-3 an offset result indicating suspension of transmission of at least one route created by the route creating unit 102b to the information processing terminals 10-1 to 10-3, so that the offset result is displayed on the display unit. When the integrated-value determining unit 102h determines that the integrated value exceeds one unit, the offset-result displaying unit 102j may change a display method and a display content to be displayed on the display unit with respect to the route that has not been able to be offset in the offset result, and displays the display content. When the integrated-value determining unit 102h determines that the integrated value exceeds one unit, because the information distributor cannot offset the emissions corresponding to the route selected according to the route selection request, the offset-result displaying unit 102j may transmit an offset result indicating that the route search condition is changed into a route search condition for a route search not using transportation facilities that emit a predetermined amount or more of the greenhouse gases to the information processing terminals 10-1 to 10-3 so that the offset result is displayed on the display unit. The offset-result displaying unit 102j may store at least a part of the offset result in the history-information file 106d for each of the information distributors.

The specified-point confirming unit 102k is a specified-point confirming unit that confirms that the information processing terminals 10-1 to 10-3 are at a point specified by the information distributor.

As an example, the specified-point confirming unit 102k may detect position information transmitted from the position detecting unit having the GPS function and mounted on the information processing terminals 10-1 to 10-3 to confirm that the information processing terminals 10-1 to 10-3 are at the specified point. Further, the specified-point confirming unit 102k may confirm a noncontact type IC chip mounted on the information processing terminals 10-1 to 10-3 or, for example, a QR code or a two-dimensional bar-code displayed on the display unit, which is distributed for identifying the respective information processing terminals 10-1 to 10-3, via a receiver installed at the specified point.

The explanation of the configuration of the route searching apparatus 100 ends here.

### Basic Processing of Route Searching Apparatus 100

The basic processing of the route searching apparatus 100 according to the present invention is explained below with reference to FIGS. 3 and 4.

As shown in FIG. 3, the information processing terminal 10 held by an end user accesses the information distributor (the information distribution server 200) (Step SA-1).

The information processing terminal 10 acquires distribution information from the information distributor (Step SA-2).

The "Distribution information" here is information of interested places and the like distributed by the information distributor, which is stored in the interested place file 206a, and may be information distributor identification information including information for identifying the information distributor (such as a static IP of the information distribution server 200), or may be the route search condition including the specific point information and the like.

The route search condition includes at least a point of departure and a destination, and may include a condition relating to date, time, display sequence (in the order of the required time, fares, the number of transfers, CO₂ emissions and the like), walking speed (standard, slow, or quick), and route to be used (an airplane, a bullet train, a limited express train, a route bus, and other paid routes).

An example of distribution information to be displayed on the display unit of the information processing terminal 10, which is distributed from the information distributor in Step SA-2 is explained with reference to FIG. 4(a).

As shown in FIG. 4(a), information of an interested place of end users and a link to a site provided by the route searching apparatus 100 are displayed on the display unit of the information processing terminal 10 as the distribution information.

As an example, names of a festival and a park, and a map of the park where the festival is held are displayed on a display screen in FIG. 4(a) as the distribution information. A note indicating that an organizer executes carbon offsets in the festival, and a "go there" link L1 for the end user to request a route search to the destination are displayed. When the end user clicks the link L1, the route search condition (for example, a condition in which the present location is set as a starting point and the park where the festival is held is set as a destination) and the information distributor identification information (information of the organizer of the festival in which carbon offsets are executed) are transmitted to the route searching apparatus 100, and a screen shifts to a page shown in FIG. 4(b).

Referring back to FIG. 3, the condition receiving unit 102a receives, from the information processing terminal 10, a route search condition input via the input unit of the information processing terminal 10 held by the end user and the information distributor identification information for identifying the information distributor, or a route search condition including the point specified by the information distributor in a point of departure or destination input via the input unit of the information processing terminal 10 (Step SA-3).

The route creating unit 102b performs route search based on the route search condition received at Step SA-3 (Step SA-4).

The process at Step SA-4 is explained in detail below.

The route creating unit 102b first creates at least one route satisfying the route search condition received by the condition receiving unit 102a, by using the route search information stored in the route-search information file 106a. The route created by the route creating unit 102b may be a route which combines transportation facilities that may travel to the interested place with the shortest time or a route which does not use the transportation facility that emits a predetermined amount or more of the greenhouse gases.

The emission calculating unit 102c calculates greenhouse gas emissions emitted at the time of using at least one route created by the route creating unit 102b for each corresponding route, by using the calculation standard of the greenhouse gases stored in the emission calculation-standard file 106b.

Specifically, as an example, the emission calculating unit 102c extracts, from at least one route created by the process performed by the route creating unit 102b, a transportation facility to be used (such as a private car, an airplane, a bus, and a train) and a travel distance (km) at the time of using the route.

The emission calculating unit 102c inquires of the emission calculation-standard file 106b about a calculation standard of emissions different for each transportation facility extracted (for example, 173 (g/km) in the case of a private car, 111 (g/km) in the case of an airplane, 51 (g/km) in the case of a bus, and 19 (g/km) in the case of a train).

The emission calculating unit 102c calculates the emissions (for example, about 182 g) by applying the extracted transportation facility (for example, a train) and the extracted travel distance (for example, about 9.6 km) to the inquired calculation standard.

Referring back to FIG. 3, the route-search-result displaying unit 102d transmits a route search result including at least one route created by the process performed by the route creating unit 102b and emissions calculated by the process performed by the emission calculating unit 102c at Step SA-4 to the information processing terminal 10, so that the route search result is displayed on the display unit of the information processing terminal 10 (Step SA-5). The route-search-result displaying unit 102d may store at least a part of the route search result in the history-information file 106d for each of the information distributors.

An example of the route search result displayed on the display unit of the information processing terminal 10 at Step SA-5 is explained with reference to FIGS. 4(b) and 4(c) below.

As shown in FIG. 4(b), the route-search-result displaying unit 102d displays the route search result including a route satisfying the route search condition and greenhouse gas emissions emitted at the time of using the route.

As an example, "route" (including information relating to the number of transfers, fares, the required time, the walking distance, transfer stations, the most convenient boarding vehicle, the most appropriate ticket gate, for example) and "emissions" (CO₂ emissions (g)) in the route search result are displayed on a display screen shown in FIG. 4(b). Specifically, "first route" is displayed on the display screen in FIG. 4(b) as a route in the route search result, and the first route includes "on foot → train → train → on foot" from the present location to the destination. In FIG. 4(b), 1) a train mark M1, 2) a train mark M2, and 3) a vehicle mark M3 are displayed at an upper end of the screen. These marks M1 to M3 indicate that the first and second routes are "train route" and the third route is "vehicle route". In the display screen in FIG. 4(b), further, CO₂ emissions of "about 182 g" is displayed as the "emissions" in the route search result and a "route map confirmation" link L2 is also displayed. When the end user clicks the link L2, a screen shifts to a page shown in FIG. 4(c).

A map in which at least one created route in the route search result is drawn, is displayed on a display screen shown in FIG. 4(c). Specifically, a walking route from the nearest station to the festival to a festival site may be displayed. The route-search-result displaying unit 102d may display a logo mark (eco) on the route to express that the route is to be carbon offset.

Referring back to FIG. 3, the route-selection receiving unit 102e receives from the information processing terminal 10 the route selection request for requesting the route selected (Step SA-6) via the input unit of the information processing terminal 10 by an end user who wishes to offset carbon footprint, based on the route and the emissions displayed on the display unit of the information processing terminal 10 by the route-search-result displaying unit 102d (Step SA-7).

An example of the route selection performed via the display unit of the information processing terminal 10 at Step SA-6 is explained with reference to FIG. 4(b) below.

As shown in FIG. 4(b), objects for route selection (for example, in FIG. 4(b), buttons B1 and B2, and links L2 and L3) are displayed on the display unit of the information processing terminal 10.

As an example, a "select this route" button B1 and a "speech navigation start" link L3 are displayed on a display screen shown in FIG. 4(b). When an end user clicks the button B1 or the link L3, route selection is performed and a route selection request is transmitted to the route searching apparatus 100.

Referring back to FIG. 3, the emission offsetting unit 102f subtracts the emissions corresponding to the route selected according to the route selection request from the amount of emission credits stored in the emission-credit amount file 106c corresponding to the information distributor specified by the information distributor identification information received by the route-selection receiving unit 102e to offset the emissions (Step SA-8). Details of an emission-credit offsetting process performed at Step SA-8 will be described later. When the specified-point confirming unit 102k cannot confirm that the information processing terminal 10 is at the specified point, the emissions offset by the emission offsetting unit 102f may be cancelled.

The offset-result displaying unit 102j transmits an offset result including at least the emissions offset by the process performed by the emission offsetting unit 102f to the information processing terminal 10 so that the offset result is displayed on the display unit of the information processing terminal 10 (Step SA-9). The offset-result displaying unit 102j may store at least a part of the offset result in the history-information file 106d for each of the information distributors.

An example of the offset result displayed on the display unit of the information processing terminal 10 by the process performed by the offset-result displaying unit 102j at Step SA-9 is explained with reference to FIGS. 4(b) and 4(d) below.

As shown in FIG. 4(d), the offset-result displaying unit 102j displays emissions that have been offset and emissions that have not been able to be offset.

As an example, when the end user clicks a "logo mark (eco)" button B2 representing carbon offset on a display screen shown in FIG. 4(b), a display screen shown in FIG. 4(d) is displayed. As an example, carbon dioxide emissions of "about 3125 kg" that have been carbon offset and carbon dioxide emissions of "about 0 kg" that have not been able to be carbon offset by the organizer are displayed on the display screen in FIG. 4(d).

The explanation of the basic processing of the route searching apparatus 100 ends here.

The explanation of the outline of the present invention ends here.

### Respective Processes Performed by Route Searching Apparatus 100

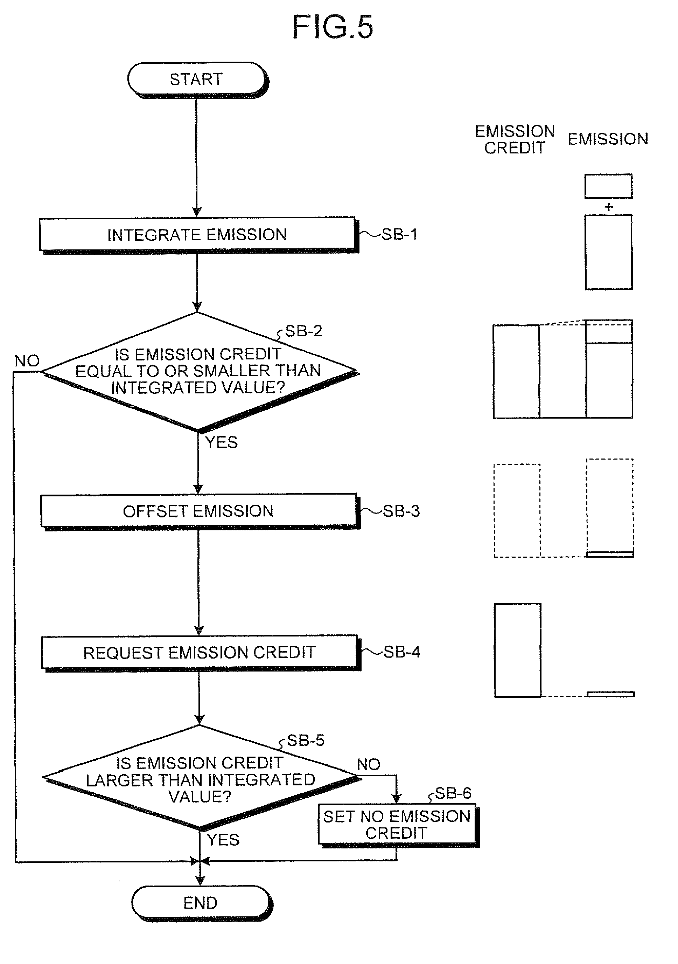

An example of respective processes (an emission offsetting process and an offset-result displaying process) performed by the route searching apparatus 100 in the present embodiment is explained in detail with reference to FIG. 5 below. FIG. 5 is a flowchart of an example of the emission offsetting process and the offset-result displaying process.

### Emission Offsetting Process and Offset-result displaying Process

An example of the emission offsetting process and the offset-result displaying process performed at Steps SA-8 and SA-9 in FIG. 3 is explained with reference to FIG. 5 below.

As shown in FIG. 5, when the route-selection receiving unit 102e in the route searching apparatus receives a route selection request respectively transmitted from the information processing terminals 10 corresponding to the same information distributor, the emission integrating unit 102g calculates an integrated value of emissions calculated by the emission calculating unit 102c for each route (Step SB-1). As an example, as shown in a conceptual diagram on the right side in FIG. 5, emissions are integrated.

When the amount of emission credits stored in the emission-credit amount file 106c is managed per unit of emission credits, the integrated-value determining unit 102h compares the integrated value calculated by the emission integrating unit 102g with one unit of emission credits stored in the emission-credit amount file 106c, to determine whether the integrated value exceeds one unit of emission credits (Step SB-2). As an example, as shown in a conceptual diagram on the right side in FIG. 5, the integrated value is compared with one unit of emission credits. The "one unit" is a unit of purchase and sale at the time of purchasing the emission credits, and for example, in the case of carbon dioxide, one unit may be one ton unit.

When the integrated-value determining unit 102h determines that the integrated value is less than one unit of emission credits (NO at Step SB-2), the emission offsetting unit 102f finishes the process.

On the other hand, when the integrated-value determining unit 102h determines that the integrated value exceeds one unit of emission credits (YES at Step SB-2), the emission offsetting unit 102f subtracts one unit of emission credits from the integrated value to offset emissions (Step SB-3). As an example, as shown in a conceptual diagram on the right side in FIG. 5, one unit of emission credits is subtracted from the integrated value, and remaining emissions becomes a new integrated value.

The purchase requesting unit 102i requests the information distributor to purchase the emission credits (Step SB-4).

The integrated-value determining unit 102h compares the new integrated value with one unit of emission credits stored in the emission-credit amount file 106c, to determine whether the integrated value exceeds one unit (Step SB-5). As an example, as shown in the conceptual diagram on the right side in FIG. 5, the new integrated value is compared with one unit of emission credits.

When the information distributor purchases new emission credits and it is determined that one unit of emission credits exceeds the integrated value (YES at Step SB-5), the emission offsetting unit 102f finishes the process.

Meanwhile, when the information distributor does not purchase enough emission credits and it is determined that the integrated value exceeds one unit of emission credits, or the information distributor does not purchase new emission credits (YES at Step SB-2), because the information distributor cannot offset the emissions corresponding to the route selected according to the route selection request, the offset-result displaying unit 102j transmits an offset result indicating suspension of transmission of at least one route created by the route creating unit 102b to the information processing terminal 10 (a display and the like that indicates that shift to the link destination is not possible without shifting to the page shown in FIG. 4(c), which is a link destination, even when the end user clicks the route map guide link L2 in FIG. 4(b)) to the information processing terminal 10, so that the offset result is displayed on the display unit. The offset-result displaying unit 102j changes a display content to be displayed on the display unit with respect to the route that has not been able to be offset in the offset result (for example, a display such that "carbon offset not possible due to insufficient emission credits") and a display method (for example, information relating to the route that has not been able to be offset is displayed in a warning color such as red or displayed by blinking), and displays the display content. Alternatively, the offset-result displaying unit 102j transmits an offset result indicating that the route search condition is changed into a route search condition for a route search not using the transportation facilities that emit a predetermined amount or more of the greenhouse gases, because the information distributor cannot offset the emissions corresponding to the route selected according to the route selection request, to the information processing terminal 10 so that the offset result is displayed on the display unit (Step SB-6).

The explanation of the processing of the route searching apparatus 100 ends here.

### Other Embodiments

The embodiment of the present invention is explained above. However, the present invention may be implemented in various different embodiments other than the embodiment described above within a technical scope described in claims.

All the automatic processes explained in the present embodiment can be, entirely or partially, carried out manually. Similarly, all the manual processes explained in the present embodiment can be, entirely or partially, carried out automatically by a known method.

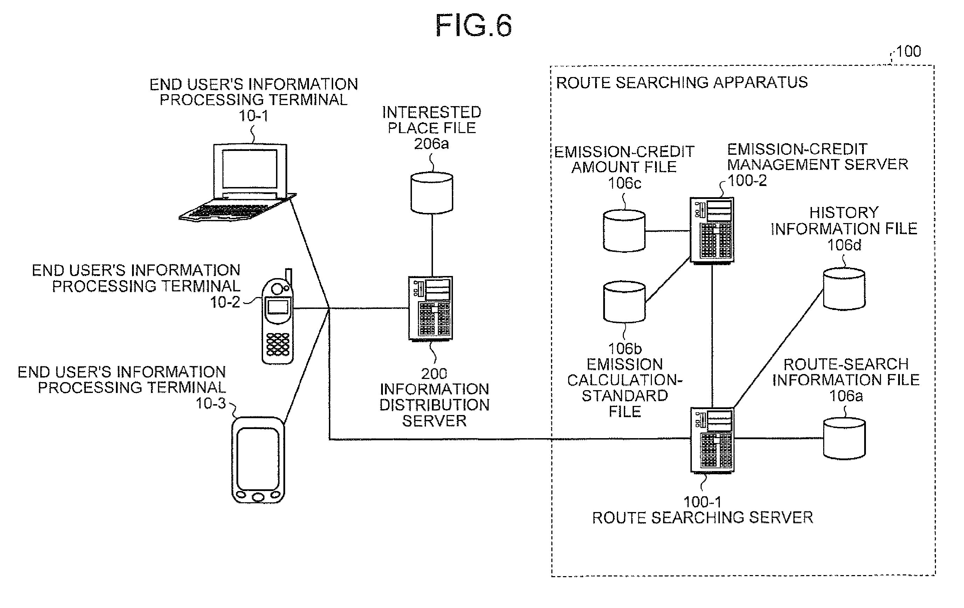

For example, in the present embodiment, the route searching apparatus 100 is configured as a single server. However, it is also possible to configure the route searching apparatus 100 with a plurality of servers functioning in tandem. FIG. 6 is a diagram of an example of the route searching apparatus 100 configured with a plurality of servers according to another embodiment of the present invention. Specifically, as illustrated in FIG. 6, a route searching server 100-1 includes the route-search information file 106a and the history-information file 106d, and has functions corresponding to the route creating unit 102b, the route-search-result displaying unit 102d, and the offset-result displaying unit 102j of the control unit 102 described above. An emission-credit management server 100-2 includes the emission calculation-standard file 106b and the emission-credit amount file 106c, and has functions corresponding to the emission calculating unit 102c, and the emission offsetting unit 102f of the control unit 102 described above. Herein, the route searching server 100-1, and the emission-credit management server 100-2 are communicably connected via a network 300 and perform data association. Hence, the plurality of servers 100-1 and 100-2 can be made to operate as the route searching apparatus 100 according to the present invention.

The process procedures, the control procedures, specific names, information including registration data for each process and various parameters such as search conditions, display example, and database construction, mentioned in the description and drawings can be changed as required unless otherwise specified.

The constituent elements of the route searching apparatus 100 are merely conceptual and may not necessarily physically resemble the structures shown in the drawings.

For example, the process functions performed by each device of the route searching apparatus 100, especially the each process function performed by the control unit 102, can be entirely or partially realized by CPU and a computer program executed by the CPU or by a hardware using wired logic. The computer program, recorded on a recording medium to be described later, can be mechanically read by the route searching apparatus 100 as the situation demands. In other words, the storage unit 106 such as read-only memory (ROM) or hard disk drive (HDD) stores the computer program that can work in coordination with an operating system (OS) to issue commands to the CPU and cause the CPU to perform various processes. The computer program is first loaded to the random access memory (RAM), and forms the control unit 102 in collaboration with the CPU.

Alternatively, the computer program can be stored in any application program server connected to the route searching apparatus 100 via the network 300, and can be fully or partially loaded as the situation demands.

The computer program may be stored in a computer-readable recording medium, or may be structured as a program product. Here, the "recording medium" includes any "portable physical medium" such as a flexible disk, an optical disk, a ROM, an EPROM (Erasable Programmable Read Only Memory), an EEPROM (Electronically Erasable and Programmable Read Only Memory), a CD-ROM (Compact Disk Read Only Memory), an MO (Magneto-Optical disk), and a DVD (Digital Versatile Disk), or can be a "communication medium" such as a communication line or a carrier wave that holds the programs for a short period of time at the time of transmission via a network 300 such as a LAN, a WAN, or the Internet.

Computer program refers to a data processing method written in any computer language and written method, and can have software codes and binary codes in any format. The computer program can be a dispersed form in the form of a plurality of modules or libraries, or can perform various functions in collaboration with a different program such as the OS. Any known configuration in the each device according to the embodiment can be used for reading the recording medium. Similarly, any known process procedure for reading or installing the computer program can be used.

Various databases (the route-search information file 106a to the history-information file 106d) stored in the storage unit 106 is a storage unit such as a memory device such as a RAM or a ROM, a fixed disk device such as a HDD, a flexible disk, and an optical disk, and stores therein various programs, tables, databases, and web page files used for providing various processing or web sites.

The route searching apparatus 100 may be structured as an information processing apparatus such as known personal computers or workstations, or may be structured by connecting any peripheral devices to the information processing apparatus. Furthermore, the route searching apparatus 100 may be realized by mounting software (including programs, data, or the like) for causing the information processing apparatus to implement the method according of the invention.

The distribution and integration of the device are not limited to those illustrated in the figures. The device as a whole or in parts can be functionally or physically distributed or integrated in an arbitrary unit according to various attachments or how the device is to be used. That is, any embodiments described above can be combined when implemented, or the embodiments can selectively be implemented.

### INDUSTRIAL APPLICABILITY

As described above in detail, according to the present invention, it is possible to provide the route searching apparatus and the route searching method in which for end users of information distribution services, actions of the end users can be connected to environmental conservation activities via carbon offset on a real-time basis along with a movement to interested places, and for information distributors, information distribution can be performed while taking environmental measures. When an information distributor who is not used to emission trading realizes to offset carbon footprint by means of transportation, everyone can participate in the carbon offset scheme without difficulty, because the route searching apparatus realizes carbon offset instead. It is expected to implement more effective measures for preventing the global warming by using the present invention. Therefore, the present invention is highly useful in information devices or in the field of information processing that supports carbon offsetting or route searching, and is highly useful in various fields such as natural energy development or the field of tree plantation.

Besides, since May 2007, the electrical power for all servers used in providing the navigation service has been switched by the present applicant(s) to the electrical power generated with natural energy sources by purchasing a green electricity certificate. Hence, the implementation of the present invention enables addressing the issue of environment conservation in a comprehensive manner.

## Claims

1. A route searching apparatus comprising:
a control unit and a storage unit and connected communicably via a network to an information processing terminal including: an input unit and a display unit, wherein
the information processing terminal is held by an end user of information distribution services provided by information distributors who wish to offset their carbon footprint,
the storage unit includes:
a route-search-information storage unit that stores route search information including timetable data of transportation facilities and road network data;
an emission-calculation-standard storage unit that stores a calculation standard of emissions of greenhouse gases per certain distance for each of the transportation facilities; and
an emission-credit-amount storage unit that stores an amount of emission credits of the greenhouse gases for each of the information distributors, and
the control unit includes:
a condition receiving unit that receives a route search condition input via the input unit of the information processing terminal, and information distributor identification information for identifying the information distributors, from the information processing terminal;
a route creating unit that creates at least one route satisfying the route search condition received by the condition receiving unit by using the route search information stored in the route-search-information storage unit;
an emission calculating unit that calculates the emissions emitted at a time of using the at least one route created by the route creating unit for each corresponding route, by using the calculation standard stored in the emission-calculation-standard storage unit;
a route-search-result displaying unit that transmits a route search result including the at least one route created by the route creating unit and the emissions calculated for each corresponding route by the emission calculating unit to the information processing terminal so that the route search result is displayed on the display unit;
a route-selection receiving unit that receives a route selection request for requesting the route selected via the input unit of the information processing terminal based on the route and the emissions displayed on the display unit of the information processing terminal by the route-search-result displaying unit from the information processing terminal;
an emission offsetting unit that offsets the emissions by subtracting the emissions corresponding to the route selected according to the route selection request from the amount of emission credits stored in the emission-credit-amount storage unit corresponding to the information distributor specified by the information distributor identification information received by the condition receiving unit, when the route selection request is received by the route-selection receiving unit; and
an offset-result displaying unit that transmits an offset result including the emissions offset by the emission offsetting unit to the information processing terminal so that the offset result is displayed on the display unit.

2. A route searching apparatus comprising:
a control unit and a storage unit and connected communicably via a network to an information processing terminal including: an input unit and a display unit, wherein
the information processing terminal is held by an end user with respect to information distributors who wish to offset their carbon footprint,
the storage unit includes:
a route-search-information storage unit that stores route search information including timetable data of transportation facilities and road network data;
an emission-calculation-standard storage unit that stores a calculation standard of emissions of greenhouse gases per certain distance for each of the transportation facilities; and
an emission-credit-amount storage unit that stores an amount of emission credits of the greenhouse gases for each of the information distributors, and
the control unit includes:
a condition receiving unit that receives a route search condition including a specified point specified by the information distributor in a point of departure or destination input via the input unit of the information processing terminal, from the information processing terminal;
a route creating unit that creates at least one route satisfying the route search condition received by the condition receiving unit by using the route search information stored in the route-search-information storage unit;
an emission calculating unit that calculates the emissions emitted at a time of using the at least one route created by the route creating unit for each corresponding route, by using the calculation standard stored in the emission-calculation-standard storage unit;
a route-search-result displaying unit that transmits a route search result including at least one route created by the route creating unit and the emissions calculated for each corresponding route by the emission calculating unit to the information processing terminal so that the route search result is displayed on the display unit;
a route-selection receiving unit that receives a route selection request for requesting the route selected via the input unit of the information processing terminal based on the route and the emissions displayed on the display unit of the information processing terminal by the route-search-result displaying unit from the information processing terminal;
an emission offsetting unit that offsets the emissions by subtracting the emissions corresponding to the route selected according to the route selection request from the amount of emission credits stored in the emission-credit-amount storage unit corresponding to the specified point specified by the information distributor specified by the route search condition received by the condition receiving unit, when the route selection request is received by the route-selection receiving unit; and
an offset-result displaying unit that transmits an offset result including the emissions offset by the emission offsetting unit to the information processing terminal so that the offset result is displayed on the display unit.

3. The route searching apparatus according to claim 1 or 2, wherein
the amount of emission credits is managed per unit of emission credits, and
the emission offsetting unit includes:
an emission integrating unit that calculates an integrated value of a plurality of the emissions calculated for each corresponding route by the emission calculating unit, when the route-selection receiving unit in the route searching apparatus receives the route selection request respectively transmitted from a plurality of the information processing terminals; and
an integrated-value determining unit that compares the integrated value calculated by the emission integrating unit with the one unit stored in the emission-credit-amount storage unit, to determine whether the integrated value exceeds the one unit.

4. The route searching apparatus according to claim 3, wherein
the amount of emission credits is an amount of the emission credits already purchased or to be purchased by the information distributor, and
the emission offsetting unit further includes:
a purchase requesting unit that when the integrated-value determining unit determines that the integrated value exceeds the one unit, offsets the integrated value for the one unit by subtracting the one unit of the emission credits from the integrated value, and when the integrated value is offset for the one unit, requests the information distributor to purchase the emission credits.

5. The route searching apparatus according to claim 3, wherein
the amount of emission credits is an amount of the emission credits already purchased or to be purchased by the information distributor, and
when the integrated-value determining unit determines that the integrated value exceeds the one unit,
the offset-result displaying unit transmits, to the information processing terminal, the offset result indicating suspension of transmission of at least one of the routes created by the route creating unit to the information processing terminal, so that the offset result is displayed on the display unit, because the information distributor is not capable of offsetting the emissions corresponding to the route selected according to the route selection request.

6. The route searching apparatus according to claim 3, wherein
the amount of emission credits is an amount of the emission credits already purchased or to be purchased by the information distributor, and
when the integrated-value determining unit determines that the integrated value exceeds the one unit,
the offset-result displaying unit changes a display method and a display content to be displayed on the display unit with respect to the route that has not been able to be offset in the offset result, and displays the display content.

7. The route searching apparatus according to claim 3, wherein
the amount of emission credits is an amount of the emission credits already purchased or to be purchased by the information distributor, and
when the integrated-value determining unit determines that the integrated value exceeds the one unit,
the offset-result displaying unit transmits the offset result indicating that the route search condition is changed into a route search condition for a route search not using the transportation facilities that emit a predetermined amount or more of the greenhouse gases, because the information distributor is not capable of offsetting the emissions corresponding to the route selected according to the route selection request, to the information processing terminal so that the offset result is displayed on the display unit.

8. The route searching apparatus according to any one of claims 2 to 7, wherein
the control unit further includes:
a specified-point confirming unit that confirms that the information processing terminal is at the specified point, and
the emission offsetting unit cancels offset of the emissions in the emission offsetting unit when it is not possible to be confirmed by the specified-point confirming unit that the information processing terminal is at the specified point.

9. The route searching apparatus according to any one of claims 1 to 8, wherein
the storage unit further includes:
a history-information storage unit that stores history information of at least a part of the route search result and the offset result associated with each other for each of the information distributors,
the route-search-result displaying unit stores at least a part of the route search result in the history-information storage unit for each of the information distributors, and
the offset-result displaying unit stores at least a part of the offset result in the history information-storing unit for each of the information distributors.

10. A route searching method executed by a route searching apparatus including:
a control unit and a storage unit and connected communicably via a network to an information processing terminal including: an input unit and a display unit, wherein
the information processing terminal is held by an end user of information distribution services provided by information distributors who wish to offset their carbon footprint, and
the storage unit includes:
a route-search-information storage unit that stores route search information including timetable data of transportation facilities and road network data;
an emission-calculation-standard storage unit that stores a calculation standard of emissions of greenhouse gases per certain distance for each of the transportation facilities; and
an emission-credit-amount storage unit that stores an amount of emission credits of the greenhouse gases for each of the information distributors,
the method comprising:
a condition receiving step of receiving a route search condition input via the input unit of the information processing terminal, and information distributor identification information for identifying the information distributors, from the information processing terminal;
a route creating step of creating at least one route satisfying the route search condition received at the condition receiving step by using the route search information stored in the route-search-information storage unit;
an emission calculating step of calculating the emissions emitted at a time of using the at least one route created at the route creating step for each corresponding route, by using the calculation standard stored in the emission-calculation-standard storage unit;
a route-search-result displaying step of transmitting a route search result including the at least one route created at the route creating step and the emissions calculated for each corresponding route at the emission calculating step to the information processing terminal so that the route search result is displayed on the display unit;
a route-selection receiving step of receiving a route selection request for requesting the route selected via the input unit of the information processing terminal based on the route and the emissions displayed on the display unit of the information processing terminal at the route-search-result displaying step from the information processing terminal;
an emission offsetting step of offsetting the emissions by subtracting the emissions corresponding to the route selected according to the route selection request from the amount of emission credits stored in the emission-credit-amount storage unit corresponding to the information distributor specified by the information distributor identification information received at the condition receiving step, when the route selection request is received at the route-selection receiving step; and
an offset-result displaying step of transmitting an offset result including the emissions offset at the emission offsetting step to the information processing terminal so that the offset result is displayed on the display unit, wherein
the steps are executed by the control unit.

11. A route searching method executed by a route searching apparatus including:
a control unit and a storage unit and connected communicably via a network to an information processing terminal including: an input unit and a display unit, wherein
the information processing terminal is held by an end user with respect to information distributors who wish to offset their carbon footprint, and
the storage unit includes:
a route-search-information storage unit that stores route search information including timetable data of transportation facilities and road network data;
an emission-calculation-standard storage unit that stores a calculation standard of emissions of greenhouse gases per certain distance for each of the transportation facilities; and
an emission-credit-amount storage unit that stores an amount of emission credits of the greenhouse gases for each of the information distributors,
the method comprising:
a condition receiving step of receiving a route search condition including a specified point specified by the information distributor in a point of departure or destination input via the input unit of the information processing terminal, from the information processing terminal;
a route creating step of creating at least one route satisfying the route search condition received at the condition receiving step by using the route search information stored in the route-search-information storage unit;
an emission calculating step of calculating the emissions emitted at a time of using the at least one route created at the route creating step for each corresponding route, by using the calculation standard stored in the emission-calculation-standard storage unit;
a route-search-result displaying step of transmitting a route search result including at least one route created at the route creating step and the emissions calculated for each corresponding route at the emission calculating step to the information processing terminal so that the route search result is displayed on the display unit;
a route-selection receiving step of receiving a route selection request for requesting the route selected via the input unit of the information processing terminal based on the route and the emissions displayed on the display unit of the information processing terminal at the route-search-result displaying step from the information processing terminal;
an emission offsetting step of offsetting the emissions by subtracting the emissions corresponding to the route selected according to the route selection request from the amount of emission credits stored in the emission-credit-amount storage unit corresponding to the specified point specified by the information distributor specified by the route search condition received at the condition receiving step, when the route selection request is received at the route-selection receiving step; and
an offset-result displaying step of transmitting an offset result including the emissions offset at the emission offsetting step to the information processing terminal so that the offset result is displayed on the display unit, wherein
the steps are executed by the control unit.
